# FASCICULE DE BREVET EUROPEEN

(11) **EP 2 872 298 B1**
(45) Date de publication et mention de la délivrance du brevet: **30.08.2017**
(21) Numéro de dépôt: 13747447.4
(22) Date de dépôt: 12.07.2013
(51) Int. Cl.: B25J 1/00

(54) **PROCÉDÉ ET APPAREIL DE REFROIDISSEMENT D'UN DÉBIT CONTENANT AU MOINS 35% DE DIOXYDE DE CARBONE ET DU MERCURE**
VERFAHREN UND VORRICHTUNG ZUR KÜHLUNG EINES FLUSSES MIT MINDESTENS 35 % KOHLENDIOXID UND QUECKSILBER
METHOD AND APPARATUS FOR COOLING A FLOW CONTAINING AT LEAST 35% CARBON DIOXIDE AND MERCURY

(30) Priorité: 13.07.2012 FR 1256769
(43) Date de publication de la demande: 20.05.2015
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); DARDE, Arthur, F-75005 Paris (FR); GRANADOS, Ludovic, F-92800 Puteaux (FR); LECLERC, Mathieu, F-75020 Paris (FR); LOCKWOOD, Frederick, F-75010 Paris (FR); TRAVERSAC, Xavier, F-75012 Paris (FR)
(74) Mandataire: Mercey, Fiona Susan
(86) Numéro de dépôt international: PCT/FR2013/051684
(87) Numéro de publication internationale: WO 2014/009675

(56) Documents cités:
- FR-A1- 2 947 329
- US-A- 4 813 987
- US-A1- 2010 011 663
- RUEHLE STEVE ET AL: "Amoco Hugoton Jayhawk Gas Processing Plant", PROCEEDINGS, ANNUAL CONVENTION - GAS PROCESSORS ASSOCIATION, GPA, US, vol. 77, 1 janvier 1998 (1998-01-01), pages 268-272, XP009166796, ISSN: 0096-8870
- S. MARK WILHELM: "Risk analysis for operation of aluminum heat exchangers contaminated by mercury", PROCESS SAFETY PROGRESS, vol. 28, no. 3, 1 septembre 2009 (2009-09-01), pages 259-266, XP055066965, ISSN: 1066-8527, DOI: 10.1002/prs.10322

## Description

La présente invention est relative à un procédé de refroidissement d'un débit contenant au moins 35% de dioxyde de carbone et du mercure.

Le débit peut être gazeux ou liquide.

Les pourcentages mentionnés dans ce document concernant des puretés sont des puretés molaires.

Le débit peut contenir 45% de dioxyde de carbone, 65% de dioxyde de carbone ou 85% de dioxyde de carbone.

De préférence le débit contient moins que 20% de méthane.

Entre autres impuretés, le débit peut contenir au moins un des impuretés suivantes : de l'oxygène, de l'azote, de l'argon, du monoxyde de carbone, de l'hydrogène.

Les appareils impliquant des échanges de chaleur sur des gaz et des liquides dans de basses températures (<0°C) font généralement appel à des échangeurs en aluminium brasé pour bénéficier de leur compacité, légèreté et faible coût au regard d'autres solutions résistant aux faibles températures (l'acier inoxydable notamment).

FR-A-2947329 décrit un procédé de refroidissement d'un débit contenant au moins 35% de dioxyde de carbone et du mercure dans un premier échangeur de chaleur en acier inoxydable jusqu'à une température de -30°C et à partir de -30°C dans un deuxième échangeur de chaleur en aluminium. Le premier échangeur est conçu pour permettre l'accumulation de mercure et après le premier échangeur une étape de purification permet de réduire voire d'éliminer le mercure en amont du deuxième échangeur.

L'utilisation d'un échangeur de chaleur en aluminium brasé à la suite d'un échangeur en acier inoxydable peut s'avérer gênante du fait du mercure résiduaire qui va s'y solidifier. La solidification dans un échangeur de chaleur en aluminium peut mener à du bouchage et à terme à la fragilisation de l'aluminium lors des phases d'arrêt.

La présence de mercure pose problème car en phase sèche, le mercure liquide s'amalgame avec l'aluminium et perce les échangeurs (phénomène bien documenté de « Liquid Metal Embrittlement » ou LME, en français « Fragilisation par Métal Liquide »). Ce phénomène est surtout lié aux dépôts de mercure comme indiqué dans « Risk analysis for operation of aluminum heat exchangers contaminated by mercury » de Wilhelm, Process Safety Progress, vol 28, no 3, 2009. Il est bien connu d'arrêter le mercure à l'aide de lits de charbon actif dopé au soufre, notamment dans l'industrie de la liquéfaction de gaz naturel.

Cette solution est néanmoins coûteuse et nécessite de changer fréquemment l'adsorbant. L'invention présentée ici vise, entre autres, à réduire l'impact du mercure sur le coût de l'appareil.

Par ailleurs, il est connu que certaines impuretés interdisent l'utilisation de tel ou tel adsorbant ou en réduisent fortement l'efficacité. Ainsi, la présence de NOx, même avec des quantités faibles (quelques ppm), rend l'utilisation de charbon actif très délicate car le NO₂ peut s'y adsorber et, puisque c'est un puissant oxydant, initier une combustion du charbon actif après accumulation au fil du temps de quantités importantes de NO₂. Il faut noter que si le gaz contient du NO et de l'oxygène, la réaction d'oxydation du NO peut être catalysée par l'adsorbant lui-même.

Il faut noter que d'autres adsorbants visant à arrêter le mercure ont la propriété d'être non combustibles (par exemple du soufre déposé sur un support d'alumine), néanmoins ils ont tous une efficacité d'arrêt du mercure réduite du fait de la présence de NO₂ qui se co-adsorbe et bloque les sites actifs.

Enfin, refroidir jusqu'à une température aux environs de -36°C (environ 2°C au dessus du point triple du mercure) dans le premier échangeur permet de récupérer le plus de mercure possible avant d'envoyer le fluide à refroidir dans le second échangeur, ce qui est mieux que l'arrêt à -30°C comme dans FR-A-2947329.

L'invention s'appuie sur le comportement du mercure lorsqu'il se refroidit. Selon une variante de l'invention, dans la zone de l'échangeur en aluminium brasé où le gaz d'alimentation se trouve à des températures supérieures à -38,6°C, l'échangeur en aluminium brasé est conçu pour ne pas accumuler de gouttes de mercure, ayant des passages en pente, des espacements particuliers des ondes pour minimiser les risques de piégeage de mercure, pas de point bas.

Des métaux d'apport particuliers pour faire les soudures sont utilisés pour éviter une corrosion accélérée, même avec des traces de mercure (notamment des soudures mono-matériaux). Les fabricants d'échangeur proposent déjà des échangeurs en aluminium brasés adaptés à un usage en présence de mercure (« All Heat Exchangers Are Not Created Equal », de Markussen. The Process Engineer, September 2004 et US-6492040).

L'intérêt de cet aspect est que l'on peut utiliser un échangeur en aluminium brasé, même en présence de beaucoup de mercure. En effet, les micro-gouttes formées lors de la condensation du mercure ne peuvent donner lieu à de la corrosion car elles sont présentes en trop petites quantités.

Le mercure condensé est en effet évacué en continu, sans accumulation possible

La même conception d'échangeur serait inopérante pour la partie de l'échange plus froide que -38,6°C (234.29 K). En effet, le mercure se déposerait sous forme solide en partie au moins sur les parois. Même si une partie du mercure solide est entrainée dans le gaz, l'essentiel est piégé sur les parois). Lors d'un arrêt avec réchauffage, le mercure fondant formerait de grosses gouttes puisque la quantité en jeu correspondrait à l'accumulation sur une longue période des traces de mercure présentes dans la phase gaz en-dessous de -38,8°C. Une concentration typique de mercure serait de 0,35 µg/Nm³ de gaz à 22 bars absolu.

Selon l'invention, il est prévu une autre approche consistant à changer de matériaux et/ou de type d'échangeur pour l'échangeur opérant à plus basse température. L'acier inoxydable devient approprié car il résiste bien aux faibles températures.

On peut, par exemple, utiliser :
- un échangeur à plaques en acier inoxydable, afin de pouvoir bénéficier d'échanges multi-fluides à courant croisés,
- un échangeur de type « tube-calandre », bien adapté pour des échanges entre deux fluides, et dans l'exemple donné plus loin, lorsque l'essentiel du froid apporté dans la suite du procédé provient de la vaporisation d'un fluide. La perte des échanges de chaleur sensible dans cette partie de l'échange thermique n'impacte pas beaucoup les performances thermiques car ces chaleurs sensibles sont surtout utilisées dans la partie plus chaude de l'échangeur (avant d'initier les changements d'état du gaz refroidi. La section de passage des tubes est plus importante que dans le cas d'un échangeur brasé à ailettes.
- d'autres types d'échangeurs en acier inoxydable (le type « plaques et calandre » notamment).

Un intérêt de cette option est d'éviter la mise en oeuvre d'adsorbant pour arrêter le mercure et de limiter l'utilisation d'échangeur plus cher et/ou moins performant à une plage réduite de fonctionnement. En plus, l'échange de chaleur dans le deuxième échangeur étant plus petit que dans le premier, l'impact de d'utiliser un deuxième échangeur de fabrication et/ou de matériau plus coûteux est faible sur le prix et les performances de l'unité

Par contre il est possible de combiner cette option avec l'usage d'une étape d'adsorption en amont de l'échangeur pour enlever une partie du mercure.

Après la zone plus chaude que -38,8°C, il est possible d'éliminer le mercure résiduel grâce à un adsorbant.

Une première (voire la seule) élimination du mercure liquide peut se faire dans un pot de séparation liquide-gaz, ou dans une colonne à contact direct liquide-gaz munie de garnissage afin d'améliorer le contact. Une colonne à contact direct est utile pour assurer l'arrêt de la phase liquide du mercure, mais d'autres moyens peuvent être envisagés : séparation liquide/gaz par cyclone, par dépôt de mercure solide sur une plaque (qui n'est pas en aluminium) plus froide que -38,8°C, drainage du gaz etc.

Si la température de sortie de cette colonne est inférieure à celle du point triple de mercure, le mercure y sera d'autant mieux arrêté car les gouttes de mercure gèleront et, la tension de vapeur s'abaissant, il y a moins de mercure restant dans la phase gaz

L'adsorbant peut nécessiter que les NO₂ et N₂O₄ soient retirés du gaz. L'arrêt du NO₂/N₂O₄ dans du CO₂ gazeux se fait bien par lavage avec du CO₂ liquide, la colonne en question opère, pour du CO₂ à environ 20 bars à environ -20°C à -30°C et répond donc bien aux points précédents.

L'adsorbant peut nécessiter de réchauffer le gaz, à nouveau, l'utilisation d'aluminium brasé est possible car le gaz se réchauffant, il ne déposera pas de mercure. Un échangeur compact est donc possible à nouveau bien que le gaz contienne du mercure.

Si l'adsorbant peut fonctionner dans les conditions de température et de composition obtenues après un premier refroidissement jusqu'à une température supérieure à -38,6°C, alors l'arrêt du mercure sera beaucoup moins coûteux que dans la version classique (effectuée à température ambiante, sans condensation préalable d'une partie du mercure) pour plusieurs raisons. D'abord la quantité de mercure à arrêter est réduite. A plus basse température, l'adsorption physique (ou physisorption impliquant la formation de liaisons de Van der Waals) est favorisée, permettant d'augmenter la capacité de mercure arrêté par kg d'adsorbant lorsque celui-ci opère sur la base de liaisons de Van der Waals. Le gaz étant à plus basse température, son débit volume est plus faible, par exemple son volume réduit de 20% environ à -38°C par rapport à 35°C). Le gaz étant sec, l'adsorbant vieillira moins. Il est possible de sécher le gaz à température ambiante, mais difficile d'y arrêter les NO₂ et N₂O₄.

Selon un objet de l'invention, il est prévu un procédé selon la revendication 1. Eventuellement
- le débit se condense partiellement dans le premier échangeur et est envoyé à un premier séparateur de phases, la partie gazeuse provenant du premier séparateur de phases constituant le gaz dérivé du débit refroidi, cette partie gazeuse étant moins riche en mercure que le débit refroidi dans le premier échangeur.
- du mercure se solidifie et se dépose dans le deuxième échangeur et/ou dans un deuxième séparateur de phases alimenté par du liquide enrichi en mercure ou du mercure liquide provenant du premier séparateur de phases.
- le mercure ne se solidifie pas dans le premier séparateur de phases.
- le mercure ne se solidifie pas dans le premier échangeur de chaleur.
- le liquide provenant du premier séparateur de phases est envoyé dans le deuxième séparateur de phases à un niveau en dessous du niveau de liquide de celui-ci.
- la deuxième température est supérieure à -36°C.
- la deuxième température est inférieure à -34,5°C
- la troisième température est inférieure à -50°C
- la troisième température est supérieure à -54°C.
- le débit refroidi n'est pas épuré pour éliminer du mercure par adsorption entre le premier et le deuxième échangeur.
- le débit refroidi n'est pas épuré pour éliminer du mercure entre le premier et le deuxième échangeur.
- le débit refroidi est épuré pour éliminer du mercure par adsorption à basse température entre le premier et le deuxième échangeur.
- le deuxième échangeur est un échangeur à plaques et à ailettes brasées en acier inoxydable ou en cuivre, nickel ou tantale ou un alliage d'au moins deux de ces métaux.
- le débit refroidi à la troisième température est ensuite séparé à une température égale ou inférieure à la troisième température pour produire un débit liquide contenant au moins 80% de dioxyde de carbone, voire au moins 95% de dioxyde de carbone.
- Le débit refroidi (ou le gaz dérivé de ce débit) se refroidit dans le deuxième échangeur pour former un fluide, le fluide est envoyé à un (deuxième) séparateur de phases et le liquide formé dans ce séparateur de phases est séparé dans une colonne de distillation.
- Un liquide enrichi en dioxyde de carbone provenant de la colonne de distillation peut se vaporiser dans le deuxième échangeur de chaleur pour produire un gaz enrichi en dioxyde de carbone.

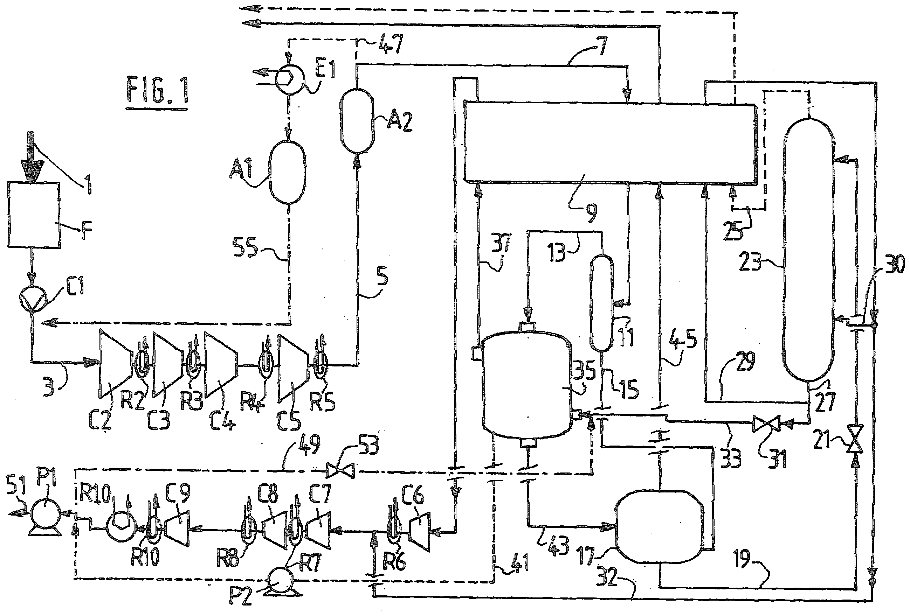

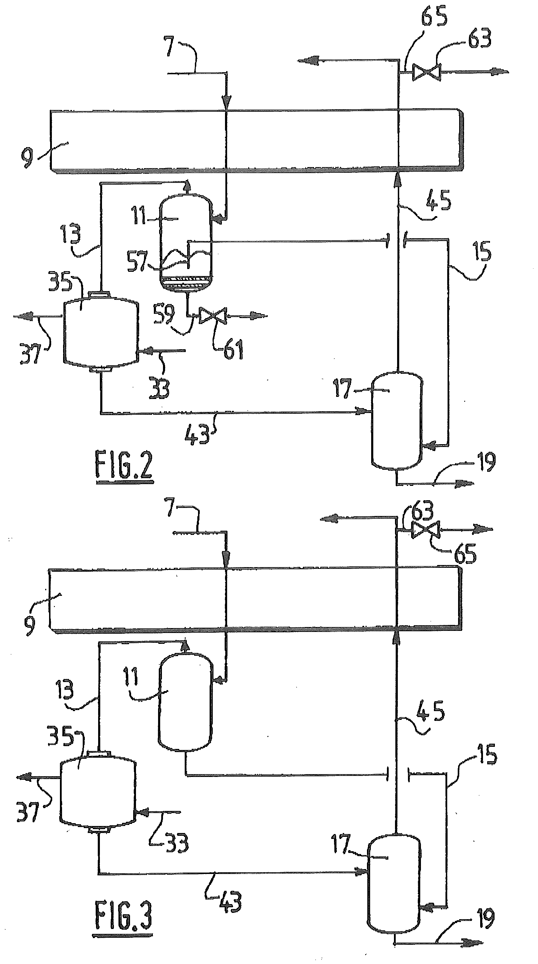

L'invention sera décrite en plus de détail en se référant aux figures. La Figure 1 représente une variante du procédé selon l'invention, les Figures 2 et 3 représentent des détails de la Figure 1 et les Figures 4 et 5 représentent des procédés selon l'invention.

Dans la Figure 1, un mélange 1 contenant au moins 35% mol de dioxyde de carbone, au moins 60% mol. de dioxyde de carbone, voire au moins 80% mol. de dioxyde de carbone. Il contient au moins 0,2 µg/Nm³ de mercure, voire au moins 2 µg/Nm³ de mercure.

Le reste du mélange 1 peut contenir un ou plusieurs des composants suivants : de l'oxygène, de l'azote, de l'argon, de l'oxyde d'azote (NO ou NO₂ ou N₂O), du monoxyde de carbone, de l'hydrogène, du méthane...

Le mélange est filtré dans un filtre F pour enlever les poussières puis comprimé dans un premier étage de compresseur C1 pour former un débit comprimé 3. Le débit comprimé 3 à 35°C est comprimé dans un deuxième étage de compression C2, refroidi dans un refroidisseur R2, comprimé dans un troisième étage de compression C3, refroidi dans un refroidisseur R3, comprimé dans un quatrième étage de compression C4, refroidi dans un refroidisseur R4, comprimé dans un cinquième étage de compression C5 et refroidi dans un refroidisseur R5 pour former un débit 5 à entre 6 et 20 bars abs. Ce débit du mélange 5 est épuré en eau dans un lit d'absorbant A2 pour former un débit épuré 7 à 35°C. Le débit épuré 7 est partiellement condensé dans un premier échangeur de chaleur 9, qui est un échangeur en aluminium constitué par un empilement de plaques séparées par des ailettes. Le débit partiellement condensé est envoyé à une température supérieure à -38,6°C, et inférieure à -34°C, voire inférieure à -34,5°C, par exemple à -35°C, dans un premier séparateur de phases 11. Dans ce premier séparateur de phases, le mercure se trouve partiellement condense et est purgé avec le liquide 15. Le gaz formé 13 dans le séparateur de phases 11 contient encore au moins 0,2 µg/ Nm³ du mercure et est envoyé aux tubes d'un deuxième échangeur de chaleur 35, permettant un échange indirect de chaleur entre seulement deux fluides, du type tubes et calandre. La figure n'illustre pas la multiplicité de tubes où se condense partiellement le gaz 13 dérivé du mélange. Le liquide formé 43 à -52°C est envoyé à un deuxième séparateur de phases 17, où est envoyé également le liquide 15 du premier séparateur de phases 11. Les séparateurs de phases 11, 17 seront de préférence en acier inoxydable. L'acier inoxydable peut être de type 316L. Les conduites reliant le premier séparateur de phase au deuxième échangeur et reliant le premier séparateur de phase au deuxième séparateur de phases seront de préférence en acier inoxydable. Par contre les garnissages structurés de la colonne 23 peuvent être en aluminium.

Du mercure se solidifie dans le deuxième échangeur 35 qui refroidit le débit 13 à une température inférieure à -38,6°C, de préférence inférieure à -50°C. La température de refroidissement est supérieure à -54°C pour éviter tout risque de geler le dioxyde de carbone.

Du mercure se solidifie également dans le deuxième séparateur de phases 17.

Un gaz 45 du deuxième séparateur de phases 17 se réchauffe dans le premier échangeur de chaleur. Le liquide 19 du deuxième séparateur 17 est détendu dans une vanne 21 et envoyé en tête de la colonne de distillation 23.

Un gaz de tête 25 appauvri en dioxyde de carbone mais enrichi en au moins une des impuretés (de l'oxygène, de l'azote, de l'argon, de l'oxyde d'azote (NO ou NO₂/N₂O₄ ou N₂O), du monoxyde de carbone, de l'hydrogène) se réchauffe dans le premier échangeur de chaleur 9.

Un liquide de cuve 27 est soutiré en cuve de la colonne et contient au moins 80% mol de dioxyde de carbone. Le liquide 27 est divisé en deux, un débit 29 se vaporise dans le premier échangeur de chaleur 9 sans avoir été détendu. Une partie 30 du gaz formé est envoyée en cuve de la colonne de distillation. Le reste 32 fait partie du produit du procédé.

Le liquide 33 provenant de la cuve est détendu dans une vanne 31 jusqu'à une pression équivalente ou légèrement supérieure à celle du point triple du dioxyde de carbone qu'il contient. Le liquide est ensuite envoyé à la calandre du deuxième échangeur 35 où il se vaporise. Le gaz formé se réchauffe dans l'échangeur 9 puis est comprimé par un étage de compression C6 et refroidi dans un refroidisseur R6 avant d'être mélangé avec le liquide vaporisé 32. Le gaz ainsi formé est comprimé par les étages C7, C8, C9 et refroidi par les refroidisseurs R7, R8, R9, R10 afin de former un gaz condensé. Ce gaz condensé est mélangé avec la purge liquide 41 du deuxième échangeur et en partie pompé par une pompe P1 pour former un produit liquide sous pression 51, à au moins 50 bars. La purge liquide 41 a précédemment été pompée dans une pompe P2. Une partie 49 du liquide sert de liquide de cycle, est détendu au point triple dans la vanne 53 et envoyé au deuxième échangeur 35, mélangé avec le débit 33.

Une partie du mélange 47 est réchauffée dans un échangeur E1 et sert à régénérer le lit d'adsorbant A1 qui est en régénération. Le débit 55 ayant servi à la régénération est mélange avec le débit 3 en aval de l'étage C1.

Il est bien évidemment possible de vaporiser le liquide 33 dans le deuxième échangeur 35 par échange de chaleur indirect avec un autre fluide du procédé, par exemple une partie du liquide de cuve vaporisé.

Quand l'appareil est à l'arrêt, un gaz de purge à plus que -38,6°C sera envoyé à l'échangeur 35 pour fondre le mercure solidifié et l'évacuer sous forme gazeuse. Ces conduites d'évacuation de purge seront en acier inoxydables.

La connexion entre les deux séparateurs de phase 11, 17 est délicate puisqu'il faut éviter que le mercure ne gèle dans la conduite venant du séparateur de phases 11, pour éviter qu'il ne bouche la conduite, mais d'envoyer tout de même le CO₂ liquide venant du séparateur de phases 11 (vers -35°C) en dessous du niveau de liquide du séparateur de phases 17 (qui se trouve à -52°C). Si on l'introduisait dans la zone gazeuse, du mercure solide pourrait être entraîné par le fluide gazeux 45.

Pour éviter d'entraîner le mercure liquide avec le fluide 19, on peut placer un tube plongeant pour prélever le fluide 19 sans prélever le mercure qui coulera au fond du pot de séparation 17.

En effet, ceci permet de réduire la portion de CO₂ perdue en phase gaz à l'arrivée dans ce séparateur de phases 17 (car le liquide plus chaud est refroidi par le liquide froid) et d'éviter d'envoyer ou d'entraîner du mercure dans la phase gazeuse 45 qui est émise à l'atmosphère.

**Tableau 1**

| **flux** | **3** | **7** | **13** | **43** |
|---|---|---|---|---|
| P (bars a) | 1 | 22 | 21,8 | 21,7 |
| T(°C) Composition (%v base sèche) | 35 | 35 | -35 | -52 |
| CO2 | 78 | 78 | 61 | 61 |
| O2 | 8 | 8 | 14 | 14 |
| Ar | 5 | 5 | 9 | 9 |
| N2 | 9 | 9 | 16 | 16 |
| teneur en mercure (µg/Nm³) | 3 | 3 | 0,5 | 0,03 |
| Note : | | | Le reste s'est condensé et est évacué dans le liquide 15 | Le reste est piégé dans l'échangeur 35 |

Dans certains cas, il peut s'avérer que la simple condensation partielle dans le séparateur de phases 11 suffise pour enlever suffisamment de mercure, que le gaz 13 puisse être traité sans prendre de précautions additionnelles pour protéger les éléments de l'appareil contre la présence de mercure. Dans ce cas, il n'est pas nécessaire de purger l'échangeur 35 pour enlever le mercure, celui-ci étant entraîné dans le liquide 15 vers le séparateur 17.

Les Figures 2 et 3 montrent en plus de détail des possibilités d'agencement d'une partie de la Figure 1. Dans les deux figures, un mélange 7 contient au moins 35% mol de dioxyde de carbone, au moins 60% mol. de dioxyde de carbone, voire au moins 80% mol. de dioxyde de carbone. Il contient au moins 0,2 µg/ Nm³ de mercure, voire au moins 2 µg/ Nm³ de mercure.

Le reste du mélange 7 peut contenir un ou plusieurs des composants suivants : de l'oxygène, de l'azote, de l'argon, de l'oxyde d'azote (NO ou NO₂ ou N₂O), du monoxyde de carbone, de l'hydrogène, du méthane.

Le mélange 7 est refroidi dans un premier échangeur 9 qui est un échangeur à plaques et à ailettes en aluminium brasé. Le mélange se refroidit jusqu'à une température supérieure à -38,6°C et inférieure à -34°C, voire inférieure à -34,5°C, et est envoyé à un premier séparateur de phases 11 en acier inoxydable. Le liquide produit 15 est enlevé du séparateur de phases et le gaz 13 est envoyé à un deuxième échangeur 35. Ce deuxième échangeur 35 peut être un échangeur à tubes et à calandre ou un échangeur à plaques et à ailettes brasées en un métal autre que l'aluminium ou un échangeur à plaques et à calandre en acier inoxydable. Dans le deuxième échangeur 35, le débit se refroidit jusqu'à une troisième température inférieure à -38,6°C.

Dans la variante de la Figure 2, une partie du mercure se liquéfie dans le premier séparateur de phase 11 qui est en acier inoxydable. Comme le dioxyde de carbone est moins dense que le mercure, le dioxyde de carbone liquéfié se trouve au-dessus de mercure et peut être enlevé par un tube plongeant 57 sans enlever du mercure. Le mercure liquide peut donc être enlevé régulièrement par une conduite 59 et une vanne 61, ou intégralement lorsque le procédé est à l'arrêt. Dans ce cas, le mercure n'est pas envoyé au deuxième séparateur de phases 17 mais est évacué de l'appareil et peut être vendu comme produit. Le reste du mercure se solidifie dans l'échangeur 35 et est enlevé en envoyant un gaz de purge dans l'échangeur 35 pour vaporiser le mercure et l'évacuer par la conduite 63 et la vanne 65.

Pour la variante de la Figure 3, le mercure liquide passe du premier séparateur de phases 11 vers le deuxième séparateur de phases 17 par la conduite 15.

Dans ce deuxième pot le mercure se solidifie. Pendant l'arrêt du procédé, la conduite amenant le liquide du deuxième séparateur 17 vers la colonne est fermée, un gaz de purge vaporise le mercure et le gaz produit est purgé par la conduite 63 et la vanne 65.

L'usage d'un deuxième tube plongeant (comme 57 dans la Figure 2) peut être préconisé pour prélever le liquide 19 du séparateur 17.

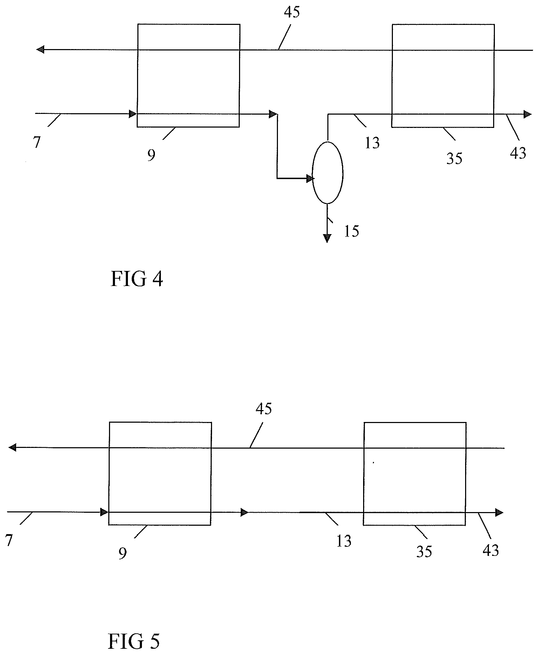

Dans les Figures 4 et 5, un mélange 7 contenant au moins 35% mol de dioxyde de carbone, au moins 60% mol. de dioxyde de carbone, voire au moins 80% mol. de dioxyde de carbone. Il contient au moins 0,2 µg/Nm³ de mercure, voire au moins 2 µg/Nm³ de mercure.

Le reste du mélange 7 peut contenir un ou plusieurs des composants suivants : de l'oxygène, de l'azote, de l'argon, de l'oxyde d'azote (NO ou NO₂ ou N₂O), du monoxyde de carbone, de l'hydrogène, du méthane.

Le mélange 7 est refroidi dans un premier échangeur 9 qui est un échangeur à plaques et à ailettes en aluminium brasé. Le mélange se refroidit jusqu'à une température supérieure à -38,6°C et inférieure à -34°C, voire inférieure à -34,5°C, et est envoyé à un séparateur de phases 11 en acier inoxydable. Le liquide produit 15 est enlevé du séparateur de phases et le gaz 13 est envoyé à un deuxième échangeur 35. Ce deuxième échangeur 35 peut être un échangeur à tubes et à calandre ou un échangeur à plaques et à ailettes brasées en un métal autre que l'aluminium ou un échangeur à plaques et à calandre en acier inoxydable. Dans le deuxième échangeur 35, le débit se refroidit jusqu'à une troisième température inférieure à -38,6°C et le mercure se dépose sous forme solide dans le deuxième échangeur.

Le deuxième échangeur 35 peut être un échangeur à plaques et à ailettes brasées en acier inoxydable ou en cuivre, nickel ou tantale ou un alliage d'au moins deux de ces métaux.

Un autre fluide 45 se réchauffe dans les deux échangeurs pour apporter des frigories. Alternativement deux fluides différents peuvent circuler chacun dans un des échangeurs. Ensuite le liquide forme 43 dans le deuxième échangeur peut être traité dans des moyens sensibles à la corrosion par mercure, car la concentration en mercure du liquide sera inférieur à 0,1 µg/Nm³.

Comme illustré à la Figure 5 la présence du séparateur de phases 11 n'est pas essentielle.

## Revendications

1. Procédé de refroidissement d'un débit contenant au moins 35% de dioxyde de carbone et au moins 0,2 µg/Nm³ de mercure, le mercure étant sous forme liquide et/ou gazeuse dans lequel
i) le débit est refroidi dans un premier échangeur à plaques brasées (9) depuis une première température jusqu'à une deuxième température supérieure à - 38,6°C pour former un débit refroidi à la deuxième température, et
ii) le débit refroidi à la deuxième température contenant au moins 35% de dioxyde de carbone et au moins 0,2 µg/Nm³ de mercure ou un gaz (13) dérivé de ce débit refroidi est refroidi dans un deuxième échangeur (35) , qui est un échangeur à tubes et à calandre ou un échangeur à plaques et à ailettes brasées ou un échangeur à plaques et à calandre, jusqu'à une troisième température inférieure à - 38,6°C, et éventuellement
iii) le débit refroidi à la deuxième température contenant au moins 35% de dioxyde de carbone et au moins 0,2 µg/Nm³ de mercure est diphasique et se sépare dans un premier séparateur de phases (11) pour former du mercure liquide et le gaz dérivé du débit refroidi épuré en mercure **caractérisé en ce que** le premier échangeur est en aluminium , le deuxième échangeur est en acier inoxydable, en cuivre, en nickel, en tantale ou un alliage de deux de ces métaux et **en ce que** la deuxième température est inférieure à -34°C .

2. Procédé selon la revendication 1 dans lequel le débit se condense partiellement dans le premier échangeur (9) et est envoyé à un premier séparateur de phases (11), la partie gazeuse (13) provenant du premier séparateur de phases constituant le gaz dérivé du débit refroidi, cette partie gazeuse étant moins riche en mercure que le débit refroidi dans le premier échangeur.

3. Procédé selon la revendication 1 ou 2 dans lequel du mercure se solidifie et se dépose dans le deuxième échangeur (35) et/ou dans un deuxième séparateur de phases (17) alimenté par du liquide (15) enrichi en mercure ou du mercure liquide provenant du premier séparateur de phases (11).

4. Procédé selon la revendication 3 dans lequel le liquide provenant du premier séparateur de phases (11) est envoyé dans le deuxième séparateur de phases (17) à un niveau en dessous du niveau de liquide de celui-ci.

5. Procédé selon l'une des revendications précédentes dans lequel la deuxième température est supérieure à -36°C.

6. Procédé selon l'une des revendications précédentes dans lequel la deuxième température est inférieure à -34,5°C.

7. Procédé selon l'une des revendications précédentes dans lequel la troisième température est inférieure à -50°C et/ou supérieure à -54°C.

8. Procédé selon l'une des revendications précédentes dans lequel le débit refroidi n'est pas épuré pour éliminer du mercure par adsorption entre le premier et le deuxième échangeur (9,35).

9. Procédé selon la revendication 8 sauf si la revendication 8 dépend d'une des revendications 2 ou 4 dans lequel le débit refroidi n'est pas épuré pour éliminer du mercure entre le premier et le deuxième échangeur (9,35).

10. Procédé selon l'une des revendications précédentes dans lequel le deuxième échangeur (35) est un échangeur à plaques et à ailettes brasées en acier inoxydable ou en cuivre, nickel ou tantale ou un alliage d'au moins deux de ces métaux.

11. Procédé selon l'une des revendications précédentes dans lequel le débit refroidi à la troisième température est ensuite séparé à une température égale ou inférieure à troisième température pour produire un débit liquide contenant au moins 80% de dioxyde de carbone, voire au moins 95% de dioxyde de carbone.

## Patentansprüche

1. Verfahren zur Kühlung eines Flusses, zumindest 35 % Kohlendioxid und zumindest 0,2 µg/Nm³ Quecksilber enthaltend, wobei das Quecksilber in flüssiger und/oder gasförmiger Form ist, wobei
i) der Fluss in einem ersten gelöteten Plattenwärmetauscher (9) von einer ersten Temperatur bis auf eine zweite Temperatur über -38,6 °C gekühlt wird, um einen auf die zweite Temperatur gekühlten Fluss zu bilden, und
ii) der auf die zweite Temperatur gekühlte Fluss, der zumindest 35 % Kohlendioxid und zumindest 0,2 µg/Nm³ Quecksilber oder ein von diesem gekühlten Fluss abgeleitetes Gas (13) enthält, in einem zweiten Wärmetauscher (35), der ein Röhren-und Rohrbündelwärmetauscher oder ein Wärmetauscher mit gelöteten Platten und Rippen, oder ein Platten- und Rohrbündelwärmetauscher ist, auf eine dritte Temperatur unter -38,6 °C gekühlt wird, und eventuell
iii) der auf die zweite Temperatur gekühlte Fluss, der zumindest 35 % Kohlendioxid und zumindest 0,2 µg/Nm³ Quecksilber enthält, zweiphasig ist, und sich in einem ersten Phasenabscheider (11) abscheidet, um flüssiges Quecksilber und das vom gekühlten Fluss abgeleitete, vom Quecksilber gereinigte Gas zu bilden, **dadurch gekennzeichnet, dass** der erste Wärmetauscher aus Aluminium ist, der zweite Wärmetauscher aus nichtrostendem Stahl, aus Kupfer, aus Nickel, aus Tantal oder einer Legierung zweier dieser Metalle ist und dadurch, dass die zweite Temperatur unter - 34 °C liegt.

2. Verfahren nach Anspruch 1, wobei der Fluss teilweise im ersten Wärmetauscher (9) kondensiert und in einen ersten Phasenabscheider (11) geschickt wird, wobei der gasförmige Abschnitt (13), der aus dem ersten Phasenabscheider stammt, das aus dem gekühlten Fluss abgeleitete Gas bildet, wobei dieser gasförmige Abschnitt einen weniger hohen Gehalt an Quecksilber aufweist, als der im ersten Wärmetauscher gekühlte Fluss.

3. Verfahren nach Anspruch 1 oder 2, wobei sich Quecksilber verfestigt und sich im zweiten Wärmetauscher (35) und/oder in einem zweiten Phasenabscheider (17) absetzt, der mit Flüssigkeit (15) versorgt wird, die mit Quecksilber oder mit dem flüssigen Quecksilber angereichert ist, das aus dem ersten Phasenabscheider (11) stammt.

4. Verfahren nach Anspruch 3, wobei die Flüssigkeit, die aus dem ersten Phasenabscheider (11) stammt, in den zweiten Phasenabscheider (17) auf ein Niveau unterhalb des Flüssigkeitsniveaus desselben geschickt wird.

5. Verfahren nach einem der vorhergehenden Ansprüche, wobei die zweite Temperatur über -36 °C liegt.

6. Verfahren nach einem der vorhergehenden Ansprüche, wobei die zweite Temperatur unter -34,5 °C liegt.

7. Verfahren nach einem der vorhergehenden Ansprüche, wobei die dritte Temperatur unter -50 °C und/oder über -54 °C liegt.

8. Verfahren nach einem der vorhergehenden Ansprüche, wobei der gekühlte Fluss nicht gereinigt wird, um Quecksilber durch Adsorption zwischen dem ersten und dem zweiten Wärmetauscher (9, 35) zu eliminieren.

9. Verfahren nach Anspruch 8, außer der Anspruch 8 hängt von einem der Ansprüche 2 oder 4 ab, wobei der gekühlte Fluss nicht gereinigt wird, um Quecksilber zwischen dem ersten und dem zweiten Wärmetauscher (9, 35) zu eliminieren.

10. Verfahren nach einem der vorhergehenden Ansprüche, wobei der zweite Wärmetauscher (35) ein gelöteter Platten- und Rippenwärmetauscher aus nichtrostendem Stahl oder aus Kupfer, Nickel oder Tantal oder einer Legierung aus zumindest zwei dieser Metalle ist.

11. Verfahren nach einem der vorhergehenden Ansprüche, wobei der auf die dritte Temperatur gekühlte Fluss danach auf einer Temperatur gleich oder kleiner der dritten Temperatur abgeschieden wird, um einen flüssigen Fluss zu erzeugen, der zumindest 80 % Kohlendioxid, oder gar zumindest 95 % Kohlendioxid enthält.

## Claims

1. Method for cooling a flow containing at least 35% carbon dioxide and at least 0.2 µg/Nm³ of mercury, the mercury being in liquid and/or gaseous form wherein;
i) the flow is cooled in a first brazed plate heat exchanger (9) from a first temperature to a second temperature above -38.6°C to form a cooled flow at the second temperature, and
ii) the cooled flow at the second temperature containing at least 35% carbon dioxide and at least 0.2 µg/Nm³ of mercury or a gas (13) derived from this cooled flow is cooled in a second heat exchanger (35), which is a shell and tube heat exchanger or a brazed plate-fin heat exchanger or a shell and plate heat exchanger, to a third temperature below -38.6°C, and optionally
iii) the cooled flow at the second temperature containing at least 35% carbon dioxide and at least 0.2 µg/Nm³ of mercury is diphasic and is separated in a first phase separator (11) to form liquid mercury and the gas derived from the cooled flow purified of mercury **characterised in that** the first heat exchanger is made of aluminium, the second heat exchanger is made of stainless steel, copper, nickel, tantalum or an alloy of two of these metals and **in that** the second temperature is below -34°C.

2. Method according to claim 1, wherein the flow is partially condensed in the first heat exchanger (9) and is sent to a first phase separator (11), the gaseous portion (13) from the first phase separator forming the gas derived from the cooled flow, this gaseous portion being less rich in mercury than the cooled flow in the first heat exchanger.

3. Method according to claim 1 or 2, wherein mercury is solidified and deposited in the second heat exchanger (35) and/or in a second phase separator (17) supplied with liquid (15) enriched with mercury or liquid mercury from the first phase separator (11).

4. Method according to claim 3, wherein the liquid from the first phase separator (11) is sent into the second phase separator (17) at a level below the liquid level thereof.

5. Method according to one of the preceding claims, wherein the second temperature is above -36°C.

6. Method according to one of the preceding claims, wherein the second temperature is below -34.5°C.

7. Method according to one of the preceding claims, wherein the third temperature is below -50°C and/or above -54°C.

8. Method according to one of the preceding claims, wherein the cooled flow is not purified to remove mercury by adsorption between the first and the second exchanger (9, 35).

9. Method according claim 8 unless claim 8 is dependent on claims 2 or 4, wherein the cooled flow is not purified to remove mercury between the first and the second exchanger (9, 35).

10. Method according to one of the preceding claims, wherein the second heat exchanger (35) is a brazed plate-fin heat exchanger made of stainless steel or copper, nickel, tantalum or an alloy of two of these metals.

11. Method according to one of the preceding claims, wherein the cooled flow at the third temperature is then separated at a temperature equal to or less than the third temperature to produce a liquid flow containing at least 80% carbon dioxide, or at least 95% carbon dioxide.
